# EUROPEAN PATENT APPLICATION

(11) **EP 3 415 536 A1**
(43) Date of publication of application: **19.12.2018**
(21) Application number: 16858488.6
(22) Date of filing: 11.01.2016
(51) Int. Cl.: C08B 11/00, C08L 1/26, B01J 20/02

(54) **METHOD FOR PREPARING ACETYLATED CELLULOSE ETHER**

(71) Applicant: LOTTE Fine Chemical Co., Ltd., Nam-gu, Ulsan 44714 (KR)
(72) Inventor: JEON, Byung Ho, Ulsan 44614 (KR); LEE, Joon Soo, Daejeon 34085 (KR)
(74) Representative: Kador & Partner PartG mbB
(86) International application number: PCT/KR2016/000250
(87) International publication number: WO 2017/122835

(57) **Abstract**

Disclosed is a method of preparing an acetylated cellulose ether. The disclosed method of preparing acetylated cellulose ether includes converting a cellulose ether to an acetylated cellulose ether in the presence of an acid catalyst.

## Description

### TECHNICAL FIELD

The inventive concept relates to a method of preparing an acetylated cellulose ether, and more particularly, to a method of preparing an acetylated cellulose ether using an acid catalyst.

### BACKGROUND ART

Cellulose has three hydroxyl groups (-OH) in one anhydroglucose unit, and the hydroxyl groups form regular hydrogen bonds in a molecule, resulting in the formation of a strong crystal structure. Therefore, cellulose has a stable structure that does not dissolve in water or an organic solvent.

When some of the hydrogen bonds in the cellulose are substituted with an alkyl group, the substituted cellulose may have a weakened crystal structure than that of non-substituted cellulose, and thus may be converted to a cellulose ether, which is a water-soluble polymer.

Since the cellulose ether, which is a water-soluble polymer, does not dissolve in an organic solvent, the field of its application may be significantly limited. In this regard, a method of preparing an acetylated cellulose ether by introducing an acetyl group to the cellulose ether has been developed. The acetylated cellulose ether has a high solubility in an organic solvent and thus may be used as a thickener, a binder, or a membrane material such as a membrane for water-treatment.

Conventionally, a method of preparing an acetylated cellulose ether having a desired weight average molecular weight (100,000 to 1,000,000 Daltons) by using a cellulose ether having a low viscosity (a viscosity of 2 wt% aqueous solution thereof: 100 to 500 cps) as a raw material has been tried, but a method of preparing an acetylated cellulose ether having the desired weight average molecular weight by using a cellulose ether having a medium viscosity (a viscosity of 2 wt% aqueous solution thereof: 1,000 to 30,000 cps) has not been tried. Therefore, conventionally, there was a problem of a narrow range of raw material selection for preparing an acetylated cellulose ether.

### DETAILED DESCRIPTION OF THE INVENTIVE CONCEPT

### TECHNICAL PROBLEM

The inventive concept provides a method of preparing an acetylated cellulose ether using an acid catalyst.

### TECHNICAL SOLUTION

According to an aspect of the inventive concept, there is provided a method of preparing an acetylated cellulose ether, the method including adding a cellulose ether, an acetylating agent, a reaction medium, and an acid catalyst to a reactor; and heat-treating the contents of the reactor to form an acetylated cellulose ether.

The acid catalyst may include an inorganic acid.

The inorganic acid may include hydrochloric acid, nitric acid, sulfuric acid, phosphoric acid.

A viscosity of a 2 wt% aqueous solution of the cellulose ether may be in a range of 1,000 to 30,000 cps when measured by using a Brookfield viscometer at 20°C and 20 rpm.

The cellulose ether may include methylcellulose, hydroxypropylmethylcellulose, hydroxyethylmethylcellulose, hydroxyethylcellulose, or a combination thereof.

A weight average molecular weight of the acetylated cellulose ether may be in a range of 100,000 to 1,000,000 Daltons.

The method of preparing an acetylated cellulose ether may include the cellulose ether, the acetylating agent, the reaction medium, and the acid catalyst to a reactor; and heat-treating the contents of the reactor to form an acetylated cellulose ether.

The method of preparing an acetylated cellulose ether may further include mixing the contents of the reactor with water while stirring the contents to crystallize the acetylated cellulose ether; separating the crystallized acetylated cellulose ether; and drying the separated acetylated cellulose ether.

The acetylating agent may include acetic anhydride, acetyl chloride, dicyclohexylcarbodiimide, or a combination thereof.

The reaction medium may include acetic acid, pyridine, isopropylalcohol (IPA), or a combination thereof.

The heat-treating may be performed at a temperature in a range of 50 to 90°C for 4 to 12 hours.

### ADVANTAGEOUS EFFECTS

A method of preparing an acetylated cellulose ether according to an embodiment of the present invention may prepare an acetylated cellulose ether having a desired weight average molecular weight by using a cellulose ether having a medium viscosity. Thus, when the method of preparing an acetylated cellulose ether according to an embodiment of the present invention and a conventional method of preparing an acetylated cellulose ether are each used in an acetylation reaction of a cellulose ether having a medium viscosity range and an acetylation reaction of a cellulose ether having a low viscosity range, a range of raw material selection may be wide in preparation of an acetylated cellulose ether.

### BEST MODE

Hereinafter, a method of preparing an acetylated cellulose ether according to an embodiment of the present invention will be described in detail.

The method of preparing an acetylated cellulose ether according to an embodiment of the present invention includes converting a cellulose ether to an acetylated cellulose ether in the presence of an acid catalyst.

The method of preparing an acetylated cellulose ether may prepare an acetylated cellulose ether having a desired weight average molecular weight (e.g., 100,000 to 1,000,000 Daltons) from a cellulose ether raw material having a medium viscosity (e.g., a viscosity of a 2 wt% aqueous solution thereof: 1,000 to 30,000 cps) by using an acid catalyst.

On the other hand, since a conventional method of preparing an acetylated cellulose ether uses a basic salt such as sodium acetate as a catalyst, when a cellulose ether having a medium viscosity is used as a raw material, an acetylated cellulose ether may not be synthesized or an acetylated cellulose ether having the desired weight average molecular weight may not be obtained. Therefore, the conventional method of preparing an acetylated cellulose ether may only use a cellulose ether having a low viscosity (a viscosity of a 2 wt% aqueous solution thereof: 100 to 500 cps) as a raw material in order to obtain an acetylated cellulose ether having the desired weight average molecular weight.

Therefore, when the method of preparing an acetylated cellulose ether according to an embodiment of the present invention and a conventional method of preparing an acetylated cellulose ether are each used in an acetylation reaction of a cellulose ether having a medium viscosity range and an acetylation reaction of a cellulose ether having a low viscosity range, there may be an advantage of having a wide range of raw material selection in preparation of an acetylated cellulose ether.

The acid catalyst may include an inorganic acid.

The inorganic acid may include hydrochloric acid, nitric acid, sulfuric acid, phosphoric acid, or a combination thereof.

A viscosity of a 2 wt% aqueous solution of the cellulose ether may be in a range of 1,000 to 30,000 cps when measured by using a Brookfield viscometer under conditions of 20°C and 20 rpm. When the viscosity of the 2 wt% aqueous solution is within this range, an acetylated cellulose ether having a weight average molecular weight in a range of 100,000 to 1,000,000 Daltons may be obtained.

The cellulose ether may include methylcellulose, hydroxypropylmethylcellulose, hydroxyethylmethylcellulose, hydroxyethylcellulose, or a combination thereof.

The cellulose ether may be prepared by etherification of a hydroxyl group of the cellulose. That is, due to etherification of the cellulose, some of hydroxyl groups in a cellulose structure may be blocked or a hydrogen in the hydroxyl group may be substituted with another substituent to form a cellulose ether. Here, a main chain of the cellulose is not ceased and maintained, but a hydrogen bond in the cellulose may be broken, and thus the cellulose is transformed into a noncrystalline structure, which may thus result in an aqueous cellulose ether having a high molecular weight.

The acetylated cellulose ether may have a weight average molecular weight in a range of 100,000 to 1,000,000 Daltons.

Hereinafter, the method of preparing an acetylated cellulose ether will be described in detail.

The method of preparing an acetylated cellulose ether may include adding a cellulose ether, an acetylating agent, a reaction medium, and an acid catalyst to a reactor (S1); and heat-treating the reactor content to form an acetylated cellulose ether (S2).

The step S1 may include adding the reaction medium and the acetylating agent to the reactor (S1-1) while stirring; heating the reactor content to a temperature in a range of 50 to 90°C (e.g., 60°C) (S1-2); adding the cellulose ether to the reactor (S1-3); and adding the acid catalyst to the reactor (SI-4). However, the present invention is not limited thereto, and, in the step S1, the order of adding the cellulose ether, the acetylating agent, the reaction medium and the acid catalyst, and/or a point of time at which the reactor content is heated may vary.

The step S1-4 may be performed after completely dissolving the cellulose ether in the reaction medium in the step S1-3.

The reaction medium may include acetic acid, pyridine, isopropyl alcohol (IPA), or a combination thereof.

The acetylating agent may include acetic anhydride, acetyl chloride, dicyclohexylcarbodiimide, or a combination thereof.

In the step S2, the heat-treating of the reactor content may be performed at 50 to 90°C (e.g., 60°C) for 4 to 12 hours (e.g., 6 hours).

In the step S2, a hydrogen atom in the hydroxyl group included in the cellulose ether is substituted with an acetyl group (CH₃CO⁻) (this substitution is also referred to as acetylation), and thus a water-insoluble acetylated cellulose ether is formed.

In Formulae 1 and 2 below, there is shown a process of converting an anhydroglucose, as a basic repeating unit of cellulose, to a basic repeating unit of an acetylated cellulose ether by undergoing etherification and subsequent acetylation.

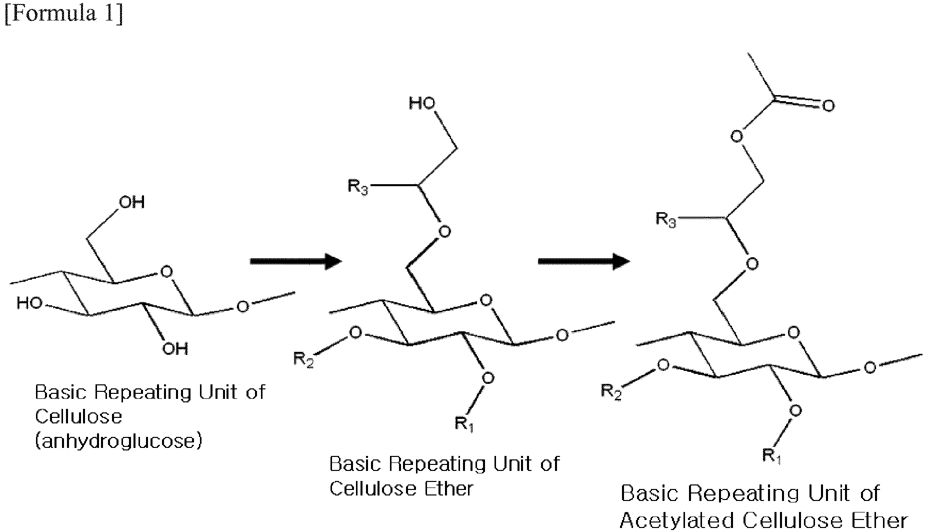

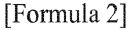

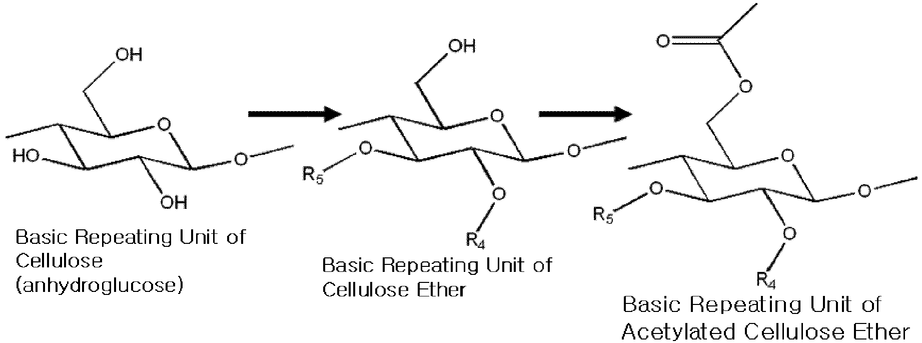

In Formula 1, the cellulose is converted into hydroxyalkylalkylcellulose by etherification, and then the hydroxyalkylalkylcellulose is converted into an acetylated cellulose ether by acetylation. In Formula 2, the cellulose is converted into alkyl cellulose by etherification, and then the alkyl cellulose is converted into an acetylated cellulose ether by acetylation.

In Formula 1, R₁ and R₂ may be each independently H, CH₃, CH₂CH₂OH, or CH₂CH(CH₃)OH, and R₃ may be H or CH₃.

In Formula 2, R₄ and R₅ may be each independently H or CH₃, and at least one of R₄ and R₅ may be CH₃.

The acetylated cellulose ether may be prepared by substituting a hydrogen in most of hydroxyl groups existing in the cellulose ether with an acetyl group, which is a hydrophobic group. Thus, although the acetylated cellulose ether is not dissolved in water, the acetylated cellulose ether has a property of being dissolved in an organic solvent.

The acetylated cellulose ether maybe used in a membrane for water-treatment.

The method of preparing an acetylated cellulose ether may further include, after the step S2, mixing the reactor content with water while stirring to crystallize the acetylated cellulose ether (S3), separating the crystallized acetylated cellulose ether (S4), and drying the separated acetylated cellulose ether (S5).

In the step S3, water may be evenly sprayed onto the reactor content through small-diameter nozzles.

The step S4 is to collect the crystallized acetylated cellulose ether from the reactor content. Therefore, the step S4 may be performed by using a filter having pores of an appropriate size.

The step S5 may be performed at a sufficiently high temperature for a sufficient period of time to completely dry the separated acetylated cellulose ether.

### MODE OF THE INVENTIVE CONCEPT

Hereinafter, the present invention will be described in further detail by referring to Examples, but the present invention is not limited to these Examples.

### Example

### Examples 1 to 5 and Comparative Examples 1 and 2: Preparation of an acetylated cellulose ether

First, acetic acid (AA) and acetic anhydride (AAH) were added to a 1-L reactor equipped with a stirrer while driving the stirrer at a rate of 200 rpm. Then, the reactor content was heated to a temperature of 60°C. Subsequently, a cellulose ether (CE) was added to the reactor. Next, once the cellulose ether was completely dissolved in the acetic acid, a catalyst was further added to the reactor. Thereafter, the reactor content was heated at 60°C for 6 hours to allow the cellulose ether to be acetylated. As a result, an acetylated cellulose ether was obtained. Then, while stirring the reactor content at a rate of 200 rpm, water was evenly sprayed onto the reactor content by using a syringe. As a result, a crystallized acetylated cellulose ether was obtained. Thereafter, the crystallized acetylated cellulose ether was separated from the reactor content by using a filter system having a 450 mesh size (prepared in-house). Subsequently, the separated acetylated cellulose ether was dried at 70°C for 4 hours. As a result, the dried acetylated cellulose ether was obtained. Types and amounts of materials used in each of Examples and Comparative Examples are shown in Table 1.

**[Table 1]**

| | AA (g) | AAH (g) | CE | | | Catalyst | |
|---|---|---|---|---|---|---|---|
| | | | Type | Viscosity (cps) | Amount (g) | Type | Amount (g) |
| Example 1 | 250 | 200 | CE1^{*1} | 4,060 | 50 | Phosphoric acid | 5.0 |
| Example 2 | 250 | 200 | CE1 | 4,060 | 50 | Phosphoric acid | 3.0 |
| Example 3 | 250 | 200 | CE1 | 4,060 | 50 | Phosphoric acid | 7.0 |
| Example 4 | 250 | 200 | CE1 | 4,060 | 50 | Sulfuric acid | 1.0 |
| Example 5 | 250 | 200 | CE2^{*2} | 4,900 | 50 | Phosphoric acid | 5.0 |
| Comparative Example 1 | 250 | 200 | CE1 | 4,060 | 50 | SA^{*4} | 60 |
| Comparative Example 2 | 250 | 200 | CE3^{*3} | 312 | 50 | SA | 60 |

| | | | | | | | |
|---|---|---|---|---|---|---|---|
| *1: Samsung Fine Chemicals Co., Ltd., Mecellose PMC-40H-1 *2: Samsung Fine Chemicals Co., Ltd., Mecellose PMC-40H-2 *3: Samsung Fine Chemicals Co., Ltd., Mecellose FMC-60150 *4: Sodium acetate | | | | | | | |

### Evaluation Example: Evaluation of physical properties of an acetylated cellulose ether

Degrees of substitution of an acetyl group and weight average molecular weight of samples of the acetylated cellulose ethers prepared in Examples 1 to 5 and Comparative Examples 1 and 2 were each measured in the same manner described below, and the results are shown in Table 2.

### (Measurement of degree of substitution of an acetyl group)

Free acetic acids generated by saponification of acetylated cellulose ether samples prepared according to Examples 1 to 5 and Comparative Examples 1 and 2 were titrated with an alkaline material to measure the degree of substitution (DS) of an acetyl group of each of the samples (ASTM D871-96).

### (Measurement of Weight Average Molecular Weight)

Weight average molecular weight (Mw) of each of the above prepared samples was measured by using gel permeation chromatography (Agilent, 1100 Series). More specifically, 0.1 g of each of the samples was dissolved in 100 g of tetrahydrofuran (HPLC grade), and Mw thereof was measured at 25°C and under a flow rate of 10 ml/min using tetrahydrofuran as a mobile phase.

**[Table 2]**

| | Examples | | | | | Comparative Examples | |
|---|---|---|---|---|---|---|---|
| | 1 | 2 | 3 | 4 | 5 | 1 | 2 |
| DS | 2.09 | 2.07 | 2.11 | 2.06 | 2.08 | - | 2.06 |
| Mw(Dalton) | 207,000 | 483,000 | 110,000 | 138,000 | 245,000 | Not synthesized | 276,000 |

Referring to Table 2, the cellulose ether having a medium viscosity (i.e., 4,060 and 4,900 cps) was converted to an acetylated cellulose ether having a desired weight average molecular weight (100,000 to 1,000,000 Daltons) in the presence of an acid catalyst (Examples 1 to 5). However, in the presence of a basic catalyst (i.e., sodium acetate), the cellulose ether having a medium viscosity (i.e., 4,060 and 4,900 cps) was not converted to an acetylated cellulose ether (Comparative Example 1). However, in the presence of a basic catalyst (i.e., sodium acetate), the cellulose ether having a low viscosity (i.e., 312 cps) was converted to an acetylated cellulose ether having a desired weight average molecular weight (100,000 to 1,000,000 Daltons) (Comparative Example 2).

While the inventive concept has been particularly shown and described with reference to exemplary embodiments thereof, it will be understood that various changes in form and details may be made therein without departing from the spirit and scope of the following claims.

## Claims

1. A method of preparing an acetylated cellulose ether, the method comprising:
adding a cellulose ether, an acetylating agent, a reaction medium, and an acid catalyst to a reactor; and
heat-treating the contents of the reactor to form an acetylated cellulose ether.

2. The method of claim 1, wherein the acid catalyst comprises an inorganic acid, and the inorganic acid comprises hydrochloric acid, nitric acid, sulfuric acid, phosphoric acid, or a combination thereof.

3. The method of claim 1, wherein a viscosity of a 2 wt% aqueous solution of the cellulose ether is in a range of 1,000 to 30,000 cps when measured by using a Brookfield viscometer at 20°C and 20 rpm.

4. The method of claim 1, wherein the cellulose ether comprises methylcellulose, hydroxypropylmethylcellulose, hydroxyethylmethylcellulose, hydroxyethylcellulose, or a combination thereof.

5. The method of claim 1, wherein a weight average molecular weight of the acetylated cellulose ether is in a range of 100,000 to 1,000,000 Daltons.

6. The method of claim 1 further comprising:
mixing the contents of the reactor with water while stirring the contents to crystallize the acetylated cellulose ether;
separating the crystallized acetylated cellulose ether; and
drying the separated acetylated cellulose ether.

7. The method of claim 1, wherein the acetylating agent comprises acetic anhydride, acetyl chloride, dicyclohexylcarbodiimide, or a combination thereof.

8. The method of claim 1, wherein the reaction medium comprises acetic acid, pyridine, isopropylalcohol (IPA), or a combination thereof.

9. The method of claim 1, wherein the heat-treating is performed at a temperature in a range of 50 to 90°C for 4 to 12 hours.
